# EUROPÄISCHE PATENTSCHRIFT

(11) **EP 1 225 515 B1**
(45) Veröffentlichungstag und Bekanntmachung des Hinweises auf die Patenterteilung: **12.03.2008**
(21) Anmeldenummer: 01100959.4
(22) Anmeldetag: 17.01.2001
(51) Int. Cl.: G06F 13/40

(54) **Einrichtung zum Speisen eines Busses**
Device for supplying power to a bus
Dispositif d'alimentation de bus

(43) Veröffentlichungstag der Anmeldung: 24.07.2002
(73) Patentinhaber: Siemens Schweiz AG, 8047 Zürich (CH); SIEMENS AKTIENGESELLSCHAFT, 80506 München (DE)
(72) Erfinder: Brugger, Daniel, 6313 Menzingen (CH); Jost, Fritz, 8932 Mettmenstetten (CH); Fichtner, Norbert, 84069 Schierling (DE)
(74) Vertreter: Weise, Wolfgang

(56) Entgegenhaltungen:
- EP-A- 0 749 070
- US-A- 5 043 606

## Beschreibung

Die Erfindung bezieht sich auf eine Einrichtung der im Oberbegriff des Anspruchs 1 genannten Art.

Solche Einrichtungen eignen sich zur Energieversorgung für einen Bus, der Information und Energie von Busteilnehmern führt. Die Einrichtung wird vorzugsweise in einer Gebäudeautomatisationsanlage - die auch als Gebäudeleitsystem bezeichnet wird - verwendet. In der Gebäudeautomatisationsanlage sind in der Regel eine Vielzahl Busteilnehmer über einen Bus miteinander verbunden, wobei ein Busteilnehmer beispielhaft ein Gerät zur Überwachung, Steuerung und/oder Regelung von Prozessgrössen wie etwa Raumtemperatur, Luftfeuchte oder Helligkeit ist.

Bekannt sind dezentral gespeiste Busse, bei denen jeder Busteilnehmer entweder ein speisender oder ein nichtspeisender Busteilnehmer ist. Bekannt sind ausserdem zentral gespeiste Busse, bei denen die Busspeisung ausschliesslich ab einer einzigen zentralen Speisung erfolgt, während die anderen Busteilnehmer nichtspeisende Busteilnehmer sind.

Es ist ein Busteilnehmerknoten bekannt (EP 0 749 070 A), der ein Speisemodul, eine Entscheidungseinrichtung und eine Messeinrichtung zum Erfassen der Stromsituation aufweist. Die Entscheidungseinrichtung entscheidet selbsttätig und lediglich aufgrund der Stromsituation, ob das Speisemodul den Bus speist oder nicht.

Es hat sich gezeigt, dass Bussysteme mit wenigen Teilnehmerknoten mit Vorteil dezentral und Bussysteme mit relativ vielen Teilnehmerknoten jedoch vorteilhafter zentral gespeist werden. Es ist durchaus realistisch, dass bei einem sich im Ausbaugrad verändernden Bussystem ab einem gewissen Zeitpunkt mit Vorteil auch die Art der Speisung von zentral auf dezentral oder umgekehrt anzupassen ist.

Aus US 5 043 606 ist eine Einrichtung zur Steuerung der Polarität eines I/O-Signals eines Magnetplattenspeichers bekannt. Die Polarität des I/O-Signals ist dabei über ein programmgesteuertes Register steuerbar.

Der Erfindung liegt die Aufgabe zugrunde, einen Busteilnehmerknoten für zentral oder dezentral speisbare Bussysteme vorzuschlagen, der als speisender oder als nichtspeisender Busteilnehmerknoten konfigurierbar ist und der mit geringem Aufwand implementierbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Datenkommunikationsnetz mit einem Bus und Teilnehmerknoten,
- Fig. 2: ein Blockschaltbild eines konfigurierbaren Teilnehmerknotens,
- Fig. 3: eine Steuerschaltung für ein Schaltermodul des Teilnehmerknotens, und
- Fig. 4: ein Drosselmodul des Teilnehmerknotens.

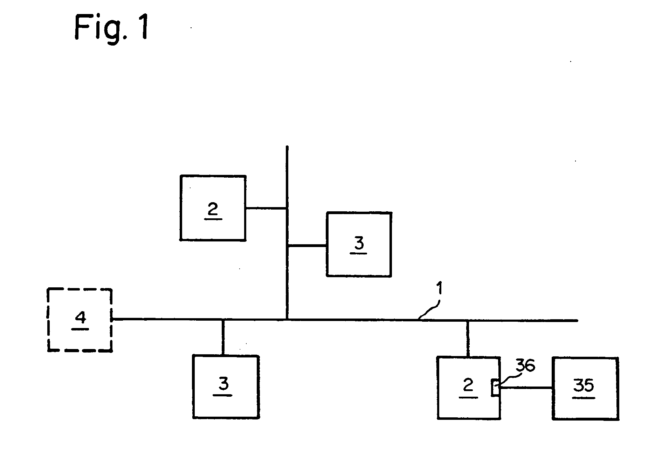

In der Fig. 1 bedeutet 1 einen Bus und 2 und 3 mehrere am Bus angeschlossene Busteilnehmerknoten, welche in der Regel räumlich verteilt am Bus 1 angeordnet sind.

Eine erste, konfigurierbare Variante 2 der Busteilnehmerknoten weist eine eigene elektrische Speisung auf, welche zur Speisung des Busses 1 einsetzbar ist. Eine zweite Variante 3 der Busteilnehmerknoten hat keine eigene Speiseeinrichtung. Bei Bedarf - und deshalb gestrichelt eingezeichnet - ist ein zentrales Speisegerät 4 am Bus 1 angeschlossen.

Der Bus 1 dient sowohl der Informations- wie auch der Energieübertragung und ist vorzugsweise ein Zweidrahtbus, beispielhaft eine verdrillte Doppelleitung (Twisted Pair).

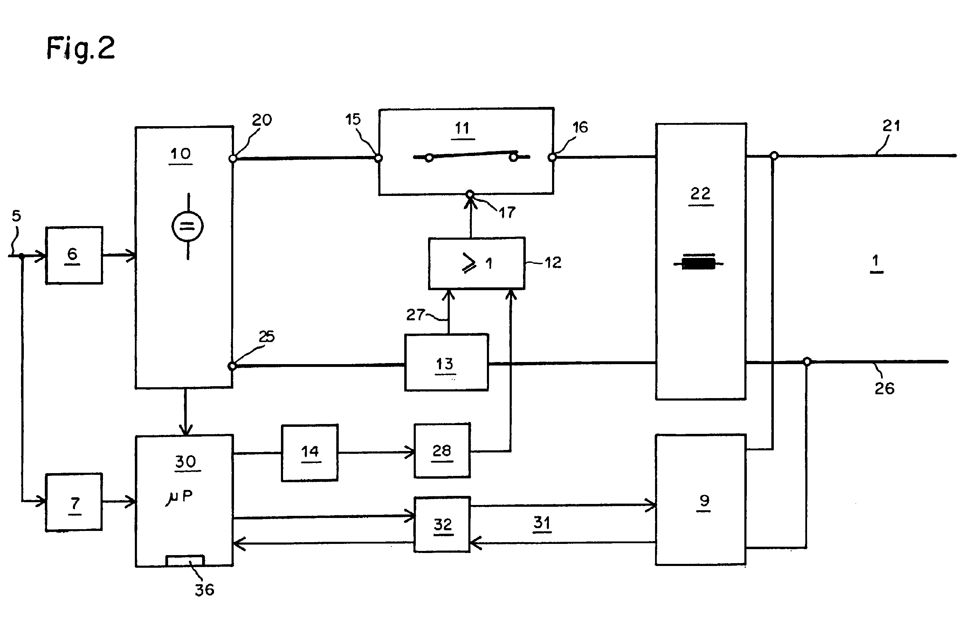

Ein in der Fig. 2 dargestellter Busteilnehmerknoten 2 weist einen Sende-Empfänger 9, ein Speisemodul 10, ein Schaltermodul 11, ein Verknüpfungsglied 12, ein Überwachungsglied 13 und eine Speicherzelle 14 auf. Das Schaltermodul 11 weist einen Spannungseingang 15, einen Spannungsausgang 16 und einen Steuereingang 17 auf.

Das Speisemodul 10 ist über das Schaltermodul 11 geschlauft am Bus 1 angeschlossen, sodass das Speisemodul 10 je nach Zustand des Schaltermoduls 11 den Bus 1 speist, oder aber vom Bus 1 getrennt ist.

In einer vorteilhaften Ausführung des Busteilnehmerknotens 2 ist der Spannungseingang 15 des Schaltermoduls 11 mit einem ersten Pol 20 des Speisemoduls 10 verbunden. Der Spannungsausgang 16 ist auf eine erste Leitung 21 des Busses 1 geführt, wobei der Spannungsausgang 16 mit Vorteil über ein Drosselmodul 22 mit der ersten Leitung 21 verbunden ist. Ein zweiter Pol 25 des Speisemoduls 10 ist über das Überwachungsglied 13 auf eine zweite Leitung 26 des Busses 1 geführt, wobei mit Vorteil noch das Drosselmodul 22 dazwischen geschaltet ist. Ausgangsseitig ist das Verknüpfungsglied 12 mit dem Steuereingang 17 des Schaltermoduls 11 verbunden. Eingangsseitig ist das Verknüpfungsglied 12 mit einem Ausgang 27 des Überwachungsglieds 13 und mit der Speicherzelle 14 verbunden, wobei bei Bedarf zur Potentialtrennung zwischen der Speicherzelle 14 und dem Verknüpfungsglied 12 ein galvanisches Trennelement 28, beispielhaft ein Optokoppler, eingefügt ist.

Die Information der Speicherzelle 14 ist von einem Mikroprozessor 30 veränderbar. Es versteht sich von selbst, dass anstelle des Mikroprozessors 30 auch ein Mikrocomputer mit integrierten Ausgabeports einsetzbar ist, wobei in diesem Fall mit Vorteil die Speicherzelle 14 durch ein Ausgabeport des Mikrocomputers verwirklicht ist.

Der Sende-Empfänger 9 ist mit dem Bus 1 und über eine bidirektionale Signalleitung 31 mit dem Mikroprozessor 30 verbunden und beispielhaft als sogenannter UART-Baustein (universal asynchronous receiver transmitter) verwirklicht. Wenn beispielsweise anstelle des Mikroprozessors 30 ein Mikrocomputer eingesetzt wird, kann der Sende-Empfänger 9 auch im Mikrocomputer integriert sein.

Bei Bedarf weist die bidirektionale Signalleitung 31 zwischen dem Mikroprozessor 30 und dem Sende-Empfänger 9 weitere galvanische Trennelemente 32, beispielsweise Optokoppler, auf.

Ein zwischen dem Speisemodul 10 und dem Bus 1 fliessender Strom ist durch das Überwachungsglied 13 messbar. Das Überwachungsglied 13 ist funktional so ausgelegt, dass der Ausgang 27 ein vordefiniertes Signal liefert, wenn der gemessene Strom einen bestimmten Pegel überschreitet. Das Verknüpfungsglied 12 ist derart mit der Speicherzelle 14 und dem Überwachungsglied 13 gekoppelt, dass das Speisemodul 10 aufgrund einer in der Speicherzelle 14 abgespeicherten Information oder aufgrund eines gewissen vom Überwachungsglied 13 erfassten Strompegels durch das vom Verknüpfungsglied 12 angesteuerte Schaltermodul 11 vom Bus 1 trennbar ist.

Über den Mikroprozessor 30 ist die Information der Speicherzelle 14 derart einstellbar, dass das Speisemodul 10 grundsätzlich über das Schaltermodul 11 am Bus 1 angeschlossen oder vom Bus 1 getrennt ist, so dass also der Busteilnehmerknoten 2 als speisender oder als nichtspeisender Busteilnehmerknoten 2 konfigurierbar ist. Eine Anweisung zum verändern der Information der Speicherzelle 14 kann grundsätzlich über den Bus 1 via Sende-Empfänger 9 oder aber über ein am Teilnehmerknoten 2 angeschlossenes Servicegerät 35 (Fig. 1) eingegeben werden. Im letzteren Fall weist der Teilnehmerknoten 2 vorteilhafterweise einen mit dem Mikroprozessor 30 verbundenen Terminalanschluss 36 auf.

Eine elektrische Stromversorgung 5 für das Speisemodul 10 und den Mikroprozessor 30 ist mit Vorteil über Trafowicklungen 6 und 7 galvanisch getrennt auf das Speisemodul 10 und auf den Mikroprozessor 30 geführt.

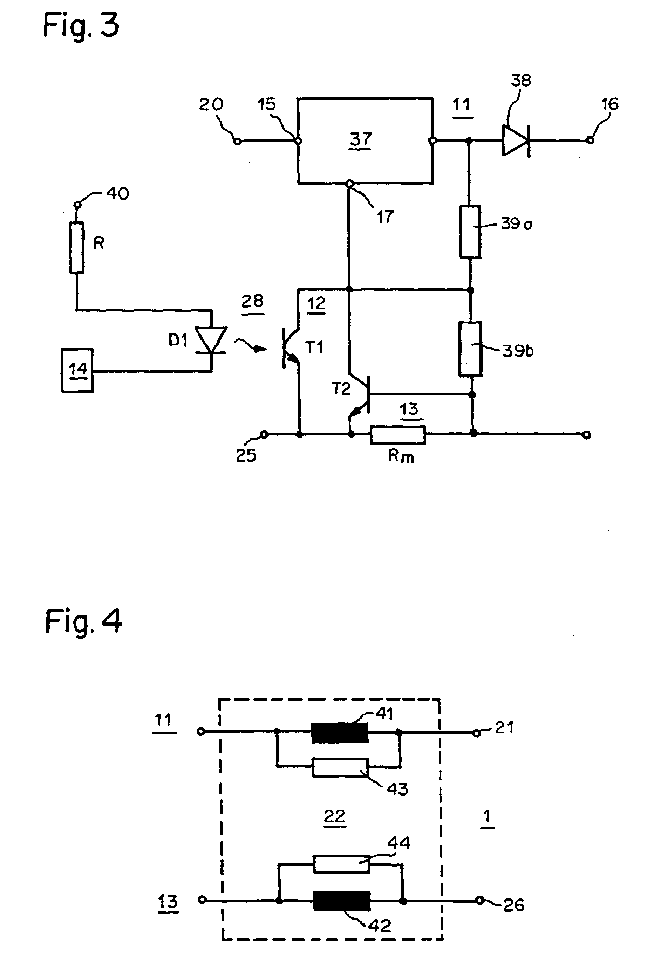

In einer kostengünstigen Implementierung des Teilnehmerknotens 2 wird mit Vorteil eine Steuerschaltung nach dem in der Fig. 3 prinzipiell dargestellten Aufbau eingesetzt. In einer vorteilhaften Implementierung wird das Schaltermodul 11 (Fig. 2) im wesentlichen durch einen marktüblichen integrierten Spannungsregler 37 mit drei Anschlüssen verwirklicht, der ausgangsseitig mit einer Diode 38 und einem Spannungsteiler 39a und 39b beschaltet ist, wobei der Abgriff des Spannungsteiler 39a, 39b auf den Steuereingang 17 geführt ist. Beispielhaft ist der Spannungsregler ein LM317 der Firma National Semiconductor. Die Funktionalität des Verknüpfungsglieds 12 wird im wesentlichen durch zwei kollektorseitig mit dem Steuereingang 17 des Schaltermoduls 11 beziehungsweise des Spannungsreglers 37 verbundene Transistoren T1 und T2 erreicht. Ein erster Transistor T1 ist der Ausgangskreis des als Optokoppler implementierten galvanischen Trennelements 28. Eine Fotodiode D1 des Eingangskreises des galvanischen Trennelements 28 ist mit der Speicherzelle 14 und über einen Widerstand R mit einem entsprechenden Speisepotenzial 40 verbunden. Ein zweiter Transistor T2 ist zudem ein Teil des Überwachungsglieds 13, welches auch einen Messwiderstand Rm zur Erfassung eines zwischen dem Speisemodul 10 (Fig. 2) und dem Bus 1 fliessenden Stromes umfasst.

Das Drosselmodul 22 und der Sende-Empfänger 9 sind derart aufeinander abgestimmt, dass Bit-Codierung gemäss einer angestrebten Norm - beispielhaft gemäss EIB (European Installation Bus) für Twisted Pair (EIBA Handbook Series, System Specifications, Medium Dependent Layers, EIB Implementation on Twisted Pair) - realisierbar ist.

Das Drosselmodul 22 weist mit Vorteil Drosselspulen 41 und 42 auf (Fig. 4), wobei eine erste Drosselspule 41 prinzipiell in Reihe zwischen dem ersten Pol 20 des Speisemoduls 10 und der ersten Leitung 21 des Busses 1 und eine zweite Drosselspule 42 in Reihe zwischen dem zweiten Pol 25 des Speisemoduls 10 und der zweiten Leitung 26 des Busses 1 angeordnet ist. Umgesetzt auf die in der Fig. 3 dargestellten Steuerschaltung ist die erste Drosselspule 41 zwischen dem vom Schaltermodul 11 geschalteten ersten Pol 20 des Speisemoduls 10 und der ersten Leitung 21 des Busses 1 und die zweite Drosselspule 42 zwischen den vom Überwachungsmodul 13 überwachten zweiten Pol 25 des Speisemoduls 10 und der zweiten Leitung 26 des Busses 1 angeordnet. Der Teilnehmerknoten 2 ist optimal an den Bus 2 anpassbar, wenn parallel zu den Drosselspulen 41 und 42 ohmsche Widerstände 43 bzw. 44 angeordnet sind.

Der Busteilnehmerknoten 2 mit dem Speisemodul 10, dem Schaltermodul 11, dem Verknüpfungsglied 12, der Speicherzelle 14 und dem Überwachungsglied 13 kann in Kommunikationsnetzen mit zentraler oder dezentraler Speisung eingesetzt werden, da das Speisemodul 10 aufgrund einer in der Speicherzelle 14 abgespeicherten Information softwaregesteuert als speisender oder als nichtspeisender Teilnehmerknoten konfigurierbar ist.

## Patentansprüche

1. Einrichtung zum Anschliessen an einen Bus (1),
- mit Mitteln (9) zum Senden und/oder Empfangen von Information über den Bus (1),
- mit einem Speisemodul (10),
**gekennzeichnet**
- **durch** ein über ein Verknüpfungsglied (12) ansteuerbares einen Spannungseingang (15) und einen Spannungsausgang (16) aufweisendes Schaltermodul (11),
wobei der Spannungseingang (15) des Schaltermoduls (11) mit einem Ausgangspol (20) des Speisemoduls (10) verbunden ist, und,
wobei der Bus (1) je nach Zustand des Schaltermoduls (11) vom Speisemodul (10) gespeist, oder aber vom Speisemodul (10) getrennt ist,
- **durch** ein Überwachungsglied (13) zum Erfassen eines vom Speisemodul (10) gelieferten Stromes, und
- **durch** eine Speicherzelle (14), wobei
- das Verknüpfungsglied (12) derart mit der Speicherzelle (14) und dem Überwachungsglied (13) gekoppelt ist, dass das Speisemodul (10) aufgrund einer in der Speicherzelle (14) abgespeicherten Information oder aufgrund eines gewissen vom Überwachungsglied (13) erfassten Strompegels vom Bus (1) trennbar ist.

2. Einrichtung nach Anspruch 1, **dadurch gekennzeichnet,**
**dass** der Bus (1) ein Zweidrahtbus ist.

3. Einrichtung nach einem vorangehenden Anspruch, **dadurch gekennzeichnet, dass** die Information der Speicherzelle (14) von einem Mikroprozessor (30) oder Mikrocomputer veränderbar ist.

4. Einrichtung nach Anspruch 3, **dadurch gekennzeichnet,**
**dass** die Speicherzelle (14) durch ein Ausgangsport des Mikroprozessors (14) oder Mikrocomputers verwirklicht ist.

5. Einrichtung nach einem vorangehenden Anspruch, **dadurch gekennzeichnet, dass** die Information der Speicherzelle (14) über eine galvanische Trennung (28) mit dem Verknüpfungsglied (12) verbunden ist.

6. Einrichtung nach einem vorangehenden Anspruch, **dadurch gekennzeichnet, dass** das Schaltermodul (11) einen integrierten Spannungsregler aufweist.

7. Einrichtung nach einem vorangehenden Anspruch, **gekennzeichnet**
**durch** ein Drosselmodul (22) mit wenigstens einer seriell in einer Buszuleitung (21; 26) angeordneten Spule (41; 42).

## Claims

1. Device for connecting to a bus (1),
- having means (9) for transmitting and/or receiving information via the bus (1),
- having a supply module (10),
**characterized**
- **by** a voltage input (15) that can be controlled via a combination element (12), and by a switch module (11) having a voltage output (16),
the voltage input (15) of the switch module (11) being connected to an output terminal (20) of the supply module (10), and
the bus (1), depending on the state of the switch module (11), being supplied by the supply module (10) or else being isolated from the supply module (10),
- by a monitoring element (13) for measuring a current supplied by the supply module (10), and
- by a memory cell (14), where
- the combination element (12) is connected to the memory cell (4) and the monitoring element (13) in such a way that, on the basis of an item of information saved in the memory cell (14), or on the basis of a certain current level measured by the monitoring element (13), the supply module (10) can be isolated from the bus (1).

2. Device according to Claim 1, **characterized in that**
the bus (1) is a twisted-pair bus.

3. Device according to a previous claim, **characterized in that**
the information in the memory cell (14) can be changed by a microprocessor (30) or microcomputer.

4. Device according to Claim 3, **characterized in that**
the memory cell (14) is implemented by an output port of the microprocessor (14) or microcomputer.

5. Device according to a previous claim, **characterized in that**
the information in the memory cell (14) is connected to the combination element (12) via a DC isolator (28).

6. Device according to a previous claim, **characterized in that** the switch module (11) comprises an integrated voltage regulator.

7. Device according to a previous claim, **characterized by** an inductor module (22) having at least one coil (41; 42) arranged in series in a bus line (21; 26).

## Revendications

1. Dispositif de raccordement à un bus (1), comprenant,
- des moyens (9) pour l'émission et/ou la réception d'information par le bus (1),
- un module d'alimentation (10),
**caractérisé**
- **par** un module interrupteur (11) pouvant être activé par un élément de liaison (12) et présentant une entrée de tension (15) et une sortie de tension (16),
l'entrée de tension (15) du module interrupteur (11) étant reliée à un pôle de sortie (20) du module d'alimentation (10) et,
le bus (1) étant alimenté en fonction de l'état du module interrupteur (11) par le module d'alimentation (10), ou étant séparé du module d'alimentation (10),
- par un élément de contrôle (13) pour la détection d'un courant fourni par le module d'alimentation (10), et
- par une cellule de mémoire (14),
- l'élément de liaison (12) étant couplé avec la cellule de mémoire (14) et l'élément de contrôle (13) de telle sorte que le module d'alimentation (10) peut être séparé du bus (1) sur la base d'une information stockée dans la cellule de mémoire (14) ou d'un certain niveau de courant détecté par l'élément de contrôle (13).

2. Dispositif selon la revendication 1, **caractérisé en ce que** le bus (1) est un bus bifilaire.

3. Dispositif selon une revendication précédente, **caractérisé en ce que**
l'information de la cellule de mémoire (14) peut être modifiée par un microprocesseur (30) ou un micro-ordinateur.

4. Dispositif selon la revendication 3, **caractérisé en ce que** la cellule de mémoire (14) est réalisée par un port de sortie du microprocesseur (14) ou du micro-ordinateur.

5. Dispositif selon une revendication précédente, **caractérisé en ce que**
l'information de la cellule de mémoire (14) est reliée par une séparation (28) galvanique à l'élément de liaison (12).

6. Dispositif selon une revendication précédente, **caractérisé en ce que** le module interrupteur (11) présente un régulateur de tension intégré.

7. Dispositif selon une revendication précédente, **caractérisé par** un module d'inductance (22) avec au moins une bobine (41 ; 42) disposée en série dans une ligne de bus (21 ; 26).
